(19) Europäisches Patentamt / European Patent Office / Office européen des brevets

(11) **EP 4 292 750 A1**

(12) **EUROPEAN PATENT APPLICATION**
published in accordance with Art. 153(4) EPC

(43) Date of publication:
**20.12.2023 Bulletin 2023/51**

(21) Application number: **22752811.4**

(22) Date of filing: **10.02.2022**

(51) International Patent Classification (IPC):
**B23K 26/064** (2014.01)  **G02B 6/26** (2006.01)
**G02B 6/42** (2006.01)

(52) Cooperative Patent Classification (CPC):
**B23K 26/064; G02B 6/26; G02B 6/42**

(86) International application number:
**PCT/JP2022/005340**

(87) International publication number:
**WO 2022/172989 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.02.2021 JP 2021020924**

(71) Applicant: FURUKAWA ELECTRIC CO., LTD.
Chiyoda-ku
Tokyo 100-8322 (JP)

(72) Inventors:
• KAWASAKI, Kohei
Tokyo 100-8322 (JP)
• MORI, Hajime
Tokyo 100-8322 (JP)
• ATSUMI, Taisuke
Tokyo 100-8322 (JP)

(74) Representative: SSM Sandmair
Patentanwälte Rechtsanwalt
Partnerschaft mbB
Joseph-Wild-Straße 20
81829 München (DE)

(54) **LASER PROCESSING DEVICE AND COUPLER**

(57) A laser processing apparatus includes, for example, first input optical fibers and an output optical fiber that are multi-mode optical fibers, a coupler configured to optically couple a first end of a bundle portion in which at least two first input optical fibers are bundled so as to be aligned in a circumferential direction, to a second end of the output optical fiber, at least one first light source that is a multi-mode light source and each optically connected to one of the first input optical fibers to output laser light, and an optical head optically connected to the output optical fiber to output laser light output by the first light source and passing through the first input optical fiber and the output optical fiber. In a cross section intersecting an axial direction of the first end, a cladding of the first input optical fiber has an extending portion extending linearly in a direction intersecting the axial direction between cores of two first input optical fibers adjacent in a circumferential direction.

FIG.5

**Description**

Field

The present invention relates to a laser processing apparatus and a coupler.

Background

A tapered fiber bundle (TFB) is conventionally known as a coupler that optically couples a plurality of input optical fibers to one output optical fiber (for example, Patent Literature 1).

Citation List

Patent Literature

Patent Literature 1: United States Patent No. 5864644

Summary

Technical Problem

It would be beneficial if a laser processing apparatus has a TFB that combines laser light from a plurality of light sources to output laser light with a more suitable beam shape.
An object of the present invention is, for example, to obtain a laser processing apparatus and a coupler that can output laser light with a more suitable beam shape.

Solution to Problem

A laser processing apparatus according to the present invention, for example, includes: at least two first input optical fibers that are multi-mode optical fibers; an output optical fiber that is a multi-mode optical fiber; a coupler configured to optically couple a first end of a bundle portion in which the at least two first input optical fibers are bundled so as to be aligned in a circumferential direction, to a second end of the output optical fiber, the second end facing the first end; at least one first light source optically connected to one of the first input optical fibers to output laser light, the at least one first light source being a multi-mode light source; and an optical head optically connected to the output optical fiber to output laser light output by the first light source and passing through the first input optical fiber and the output optical fiber, wherein in a cross section intersecting an axial direction of the first end, a cladding of the first input optical fiber has an extending portion extending linearly in a direction intersecting the axial direction between cores of two first input optical fibers adjacent in a circumferential direction.
In the laser processing apparatus, claddings of two first input optical fibers adjacent in a circumferential direction may be welded to each other at the extending portion.
Moreover, a laser processing apparatus according to the present invention, for example, includes: at least two first input optical fibers that are multi-mode optical fibers; an output optical fiber that is a multi-mode optical fiber; a coupler configured to optically couple a first end of a bundle portion in which the at least two first input optical fibers are bundled so as to be aligned in a circumferential direction, to a second end of the output optical fiber, the second end facing the first end; at least one first light source optically connected to one of the first input optical fibers to output laser light, the at least one first light source being a multi-mode light source; and an optical head optically connected to the output optical fiber to output laser light output by the first light source and passing through the first input optical fiber and the output optical fiber, wherein in a cross section intersecting an axial direction of the first end, a boundary between a core and a cladding of the first input optical fiber in a circumferential direction has a first section and a second section with a radius of curvature smaller than a radius of curvature of the first section.
In the laser processing apparatus, the boundary may have, as the second section, a second section located radially inside with respect to the first section and a second section located radially outside with respect to the first section.
The laser processing apparatus may include a plurality of first light sources configured to output laser light with a same wavelength, as the first light source.
The laser processing apparatus may include a plurality of first light sources configured to output laser light with different wavelengths, as the first light source.
The laser processing apparatus may be configured to switch between output and output stop of laser light from each of the first light sources.

In the laser processing apparatus, the bundle portion may have no optical fiber radially inside of at least two the first input optical fibers aligned in a circumferential direction.

In the laser processing apparatus, the bundle portion may have a second input optical fiber radially inside of at least two the first input optical fibers aligned in a circumferential direction.

In the laser processing apparatus, the second input optical fiber may have a third end aligned with the first end, facing the second end, and optically coupled to the second end at the bundle portion, and the laser processing apparatus may further includes second light source optically connected to the second input optical fiber to output laser light.

In the laser processing apparatus, the second input optical fiber may be a multi-mode optical fiber, and the second light source may be a multi-mode light source.

In the laser processing apparatus, the second light source may be configured to output laser light with a wavelength different from a wavelength of the first light source.

In the laser processing apparatus, power of laser light of the second light source may be lower than power of laser light of the first light source.

In the laser processing apparatus, at the first end, a core of the first input optical fiber may contain OH groups.

In the laser processing apparatus, at the first end, an amount of OH groups in the core of the first input optical fiber may be 10 ppm or more and 2000 ppm or less.

In the laser processing apparatus, a ratio of an outer diameter of a cladding to an outer diameter of a core in an unstretched segment of the first input optical fiber that may be outside the bundle portion in a free state with no external force applied is 1.04 or more and 1.25 or less.

The laser processing apparatus may include a third light source configured to output laser light and optically connected to the optical head, wherein the optical head may include an optical system configured to combine laser light from the first light source and laser light from the third light source.

In the laser processing apparatus, a wavelength of laser light output by the first light source may be 400 nm or more and 500 nm or less, and a wavelength of laser light output by the third light source may be 800 nm or more and 1200 nm or less.

Moreover, a coupler according to the present invention, for example, includes: at least two first input optical fibers that are multi-mode optical fibers; and an output optical fiber that is a multi-mode optical fiber, the coupler being configured to optically couple a first end of a bundle portion in which the at least two first input optical fibers are bundled so as to be aligned in a circumferential direction, to a second end of the output optical fiber, the second end facing the first end, wherein in a cross section intersecting an axial direction of the first end, a cladding of the first input optical fiber has an extending portion extending linearly in a direction intersecting the axial direction between cores of two first input optical fibers adjacent in a circumferential direction.

Advantageous Effects of Invention

According to the present invention, for example, a laser processing apparatus and a coupler that can output laser light with a more suitable beam shape can be obtained.

Brief Description of Drawings

FIG. 1 is an exemplary schematic diagram of a laser processing apparatus of a first embodiment.

FIG. 2 is a graph illustrating the absorption rate of light for metal materials against the wavelength of irradiating laser light.

FIG. 3 is an exemplary and schematic cross-sectional view of a coupler included in the laser processing apparatus of the first embodiment.

FIG. 4 is an exemplary and schematic cross-sectional view of an input optical fiber included in the laser processing apparatus of the first embodiment in a free state of a unstretched segment.

FIG. 5 is a V-V cross section of FIG. 3.

FIG. 6 is an exemplary schematic diagram illustrating a cross section of an output optical fiber included in the laser processing apparatus of the first embodiment, and intensity distributions of laser light on a center line along the X direction and on a center line along the Y direction passing through the optical axis in the cross section.

FIG. 7 is a schematic diagram illustrating an example of an intensity distribution of laser light on a center line in a cross section orthogonal to the optical axis at a focus position when light emitted from the output optical fiber in the laser processing apparatus of the first embodiment is gathered through an optical system.

FIG. 8 is a schematic diagram illustrating an example of an intensity distribution of laser light output from an optical head of the laser processing apparatus of the first embodiment toward an object, on a center line passing through the optical axis in a cross-section orthogonal to the optical axis.

FIG. 9 is a schematic diagram illustrating another example of an intensity distribution of laser light on a center line passing through the optical axis in a cross section of the output optical fiber included in the laser processing apparatus of the first embodiment.

FIG. 10 is an exemplary and schematic cross-sectional view of an end of an input optical fiber included in a laser processing apparatus of a second embodiment.

FIG. 11 is an exemplary and schematic cross-sectional view of an end of an input optical fiber included in a laser processing apparatus of a third embodiment. Description of Embodiments

In the following, exemplary embodiments and modifications of the present invention will be disclosed. The configurations of the embodiments and modifications described below, and the actions and results (effects) brought about by such configurations are examples. The present invention can also be implemented by configurations other than those disclosed in the following embodiments and modifications. The present invention can provide at least one of various effects (including derivative effects) obtained by the configurations.

A plurality of embodiments described below have similar configurations. The configurations of the embodiments therefore achieve similar actions and effects based on the similar configurations. In the following, those similar configurations are denoted by similar signs and an overlapping description may be omitted.

In the present description, ordinal numbers are allocated for convenience in order to distinguish parts, sections, and the like and not intended to indicate priority or order.

In the drawings, the arrows X, Y, and Z represent the X, Y, and Z directions, respectively. The X, Y, and Z directions intersect each other and are orthogonal to each other.

[First Embodiment]

[Configuration of Laser Processing Apparatus]

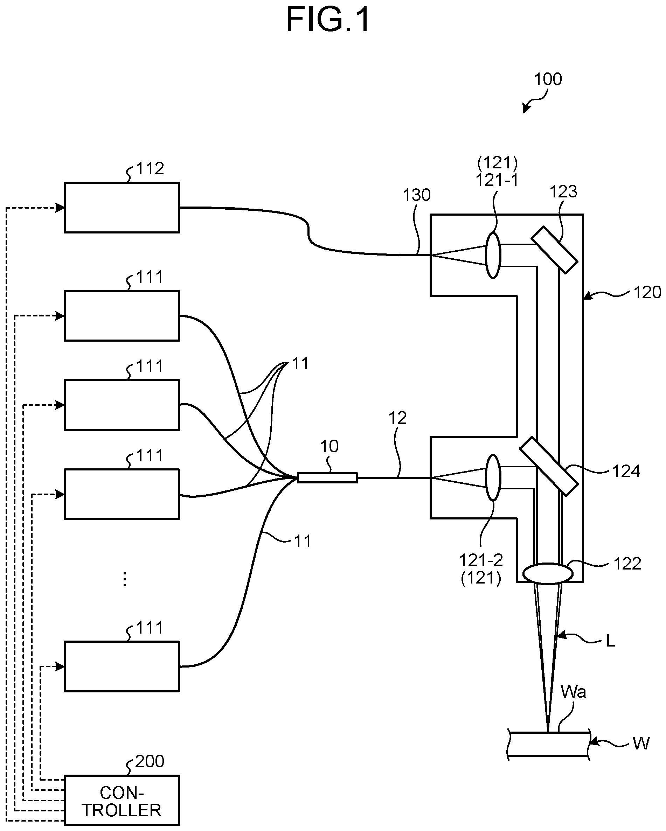

FIG. 1 is a schematic diagram of a laser processing apparatus 100 of an embodiment. The laser processing apparatus 100 includes a plurality of light source devices 111 and 112, a plurality of input optical fibers 11, one output optical fiber 12, a coupler 10, an optical head 120, a delivery optical fiber 130, and a controller 200.

In the laser processing apparatus 100, laser beams emitted from the light source devices 111 and 112 are combined, and the combined laser light L is emitted from the optical head 120. The optical head 120 performs laser processing of an object W, such as welding or cutting, by irradiating a surface Wa of the object W with the laser light L.

The laser processing apparatus 100 may include a relative movement mechanism (not illustrated) that moves the optical head 120 and the object W relative to each other in a direction intersecting the optical axis of the laser light L (irradiation direction) so that the laser light L is swept over the surface Wa. The laser processing apparatus 100 may include a galvanometer scanner (not illustrated) that changes the radiation direction of the laser light L from the optical head 120 so that the laser light L is swept over the surface Wa. In this case, the galvanometer scanner is provided in the optical head 120. The laser processing apparatus 100 may include both of the relative movement mechanism and the galvanometer scanner.

The light source devices 111 and 112 are each a laser device that outputs laser light.

The light source devices 111 are multi-mode light sources. The light source devices 111 each include, for example, a direct diode laser as a light source and output laser light with a wavelength of 400 [nm] or more and 500 [nm] or less. The light source devices 111 are an example of a first light source. In the present embodiment, the light source devices 111 output laser light with the same wavelength. However, the present embodiment is not limited to this, and the light source devices 111 may output laser light with different wavelengths.

The input optical fibers 11 are optically connected to the light source devices 111. Each of the input optical fibers 11 transmits laser light output by the corresponding light source device 111. The input optical fibers 11 are multi-mode optical fibers.

The coupler 10 optically couples the input optical fibers 11 and one output optical fiber 12. The output optical fiber 12 may also be referred to as delivery optical fiber. The output optical fiber 12 is a multi-mode optical fiber.

The multi-mode optical fiber is an optical fiber that satisfies the following equations for the normalized frequency V.

$$V > V1 = 2.405$$

$$V = k*a*\sqrt{(n1^2 - n2^2)} = 2\pi/\lambda*a*\sqrt{(n1^2 - n2^2)}$$

$$k = \omega/c$$

where $\omega$ is the angular frequency, a (>0) is the core radius, n1 is the refractive index of the core (n1>n2), n2 (>0) is the refractive index of the cladding, and $\lambda$ (>0) is the wavelength.

The output optical fiber 12 is optically connected to the optical head 120. The output optical fiber 12 transmits laser light output by the light source device 111 and passing through the input optical fibers 11 and the coupler 10 to the optical head 120.

The light source device 112 is, for example, a single-mode light source. The light source device 112 includes, for example, a fiber laser as a light source and outputs laser light with a wavelength of 800 [nm] or more and 1200 [nm] or less. The light source device 112 is an example of a third light source.

The delivery optical fiber 130 transmits laser light output by the light source device 112 to the optical head 120. The delivery optical fiber 130 is a single-mode optical fiber.

The controller 200 is a circuit operating as a computer and outputs actuation control signals to switch actuation and deactivation of the light source devices 111 and 112. In other words, the actuation of the light source devices 111 and 112 is controlled by the controller 200.

[Configuration of Optical Head]

The optical head 120 is an optical device for emitting laser light input from the light source devices 111 and 112 toward the object W. The optical head 120 includes collimating lenses 121 (121-1, 121-2), a condenser lens 122, a mirror 123, and a filter 124. The collimating lenses 121, the condenser lens 122, the mirror 123, and the filter 124 may also be referred to as optical components. The optical components of the optical head 120 can be changed according to the layout of the output optical fiber 12 and the delivery optical fiber 130, the wavelength of laser light, and the like.

The collimating lenses 121 (121-1, 121-2) each collimate laser light input from the output optical fiber 12 or the delivery optical fiber 130. The collimated laser light becomes collimated light.

The mirror 123 reflects laser light from the collimating lens 121-1 and directs the reflected laser light to the filter 124.

The filter 124 allows laser light from the mirror 123 to pass through and reflects laser light from the collimating lens 121-2 toward the condenser lens 122. The filter 124 is, for example, a dichroic mirror that passes light with a wavelength longer than a threshold wavelength.

The condenser lens 122 gathers laser light from the filter 124 as collimated light and directs the gathered laser light as laser light L (output light) to the surface Wa of the object W. When the optical head 120 has a galvanometer scanner, the galvanometer scanner is provided, for example, between the filter 124 and the condenser lens 122.

[Wavelength and Absorption Rate of Light]

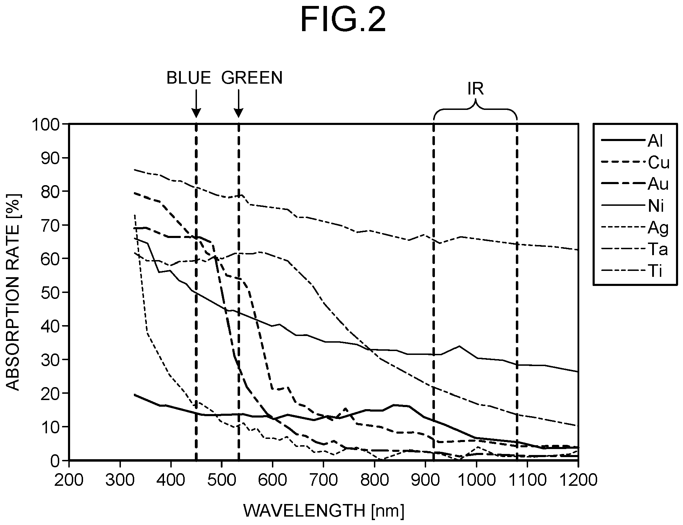

The absorption rate of light for metal materials will now be described. FIG. 2 is a graph illustrating the absorption rate of light for metal materials against the wavelength of irradiating laser light L. The horizontal axis of the graph in FIG. 2 indicates wavelength, and the vertical axis indicates absorption rate. FIG. 2 illustrates the relation between wavelength and absorption rate for aluminum (Al), copper (Cu), gold (Au), nickel (Ni), silver (Ag), tantalum (Ta), and titanium (Ti).

Although the characteristics vary with materials, it can be understood that the absorption rate of energy is higher when blue or green laser light is used than when common infrared (IR) laser light is used, for the metals listed in FIG. 2. This feature is noticeable in copper (Cu), gold (Au), and the like.

When an object W with a relatively low absorption rate for the wavelength used is irradiated with laser light, most of optical energy is reflected and does not affect the object W as heat. It is therefore necessary to apply a relatively high power to obtain a melted section with a sufficient depth. In this case, energy is rapidly applied at the beam center to cause sublimation, resulting in a keyhole.

On the other hand, when an object W with a relatively high absorption rate for the wavelength used is irradiated with laser light, much of the applied energy is absorbed by the object W and converted into thermal energy. In this process, when laser light with a low power density is applied, thermal conduction-type melting results.

In the present embodiment, as described above, the light source device 111 outputs laser light in a wavelength band (for example, 400 [nm] or more and 500 [nm] or less) that has a relatively high absorption rate for copper, gold, and the like and produces thermal conduction-type melting. On the other hand, the light source device 112 outputs laser light in a wavelength band (for example, 800 [nm] or more and 1200 [nm] or less) that has a relatively low absorption rate for copper, gold, and the like and produces keyhole-type melting. The optical head 120 then directs laser light L including laser light in both of these wavelength bands toward the object W. This configuration provides the advantages of radiation of laser light in both wavelength bands.

[Configuration of Coupler]

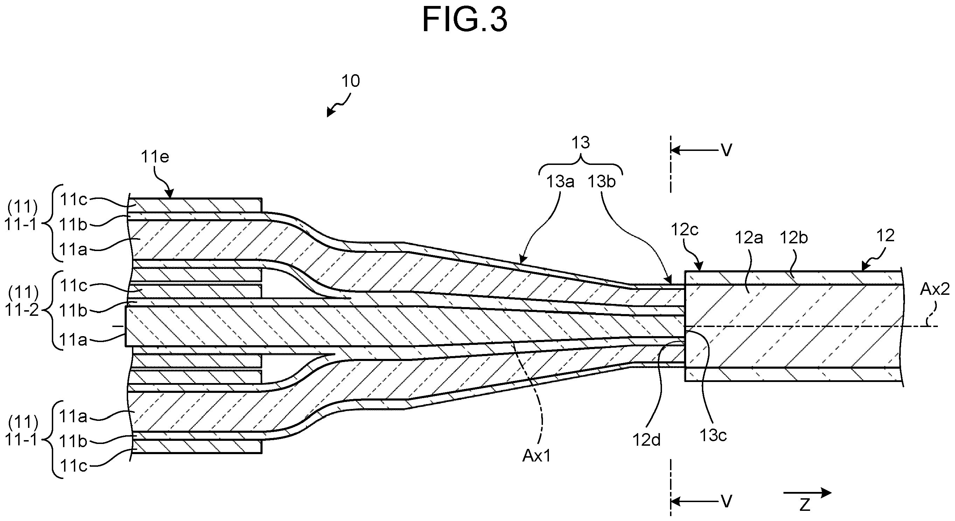

FIG. 3 is a cross-sectional view of the coupler 10 in a cross section along optical axes Ax1 and Ax2. The coupler 10 optically couples an end 13b of the input optical fibers 11 to an end 12c of the output optical fiber 12. The coupler 10 mechanically connects and optically couples the input optical fibers 11 to one output optical fiber 12 such that the optical axis Ax1 (center axis) of the input optical fibers 11 and the optical axis Ax2 (center axis) of one output optical fiber 12 are continuous with substantially no misalignment. In the present embodiment, a facet 12d in a direction opposite to the Z direction of the end 12c of one output optical fiber 12 faces a facet 13c in the Z direction of the end 13b of the input optical fibers 11. The facet 13c integrated at the end 13b and the facet 12d of the end 12c are fused and connected to each other. The coupler 10 may also be referred to as a combiner. The end 13b is an example of a first end, and the end 12c is an example of a second end.

In the present embodiment, as an example, the input optical fibers 11 include one input optical fiber 11-2 and six input optical fibers 11-1. In other words, the coupler 10 has a total of seven input optical fibers 11. Only two of the six input optical fibers 11-1 are illustrated in FIG. 3. The seven input optical fibers 11 are bundled together. In other words, the six input optical fibers 11-1 are arranged to be aligned in the circumferential direction around the optical axis Ax1 so as to surround the periphery of the input optical fiber 11-2. The input optical fibers 11-1 are an example of a first input optical fiber, and the input optical fiber 11-2 is an example of a second input optical fiber.

The input optical fibers 11 (11-1, 11-2) each have a core 11a, a cladding 11b formed around the outer periphery of the core 11a, and a coating 11c formed around the outer periphery of the cladding 11b. The core 11a and the cladding 11b can each be made of, for example, glass such as quartz glass. The coating 11c can be made of, for example, a synthetic resin material. The coating 11c is removed at the end in the Z direction. The input optical fiber 11 is, for example, a multi-mode optical fiber with NA of 0.15 to 0.22.

The output optical fiber 12 is a multi-mode optical fiber having a core 12a and a cladding 12b surrounding the periphery of the core 12a. The core 12a and the cladding 12b can be made of, for example, glass such as quartz glass. The output optical fiber 12 has a coating formed around the outer periphery of the cladding 12b. The coating can be made of, for example, a synthetic resin material. The output optical fiber 12 is, for example, a multi-mode optical fiber with NA equal to or greater than that of the input optical fibers 11.

At the end in the Z direction of the input optical fibers 11, the portions having the coating 11c removed are bundled to form an integrated portion 13. The integrated portion 13 has a tapered portion 13a and the end 13b adjacent to the tapered portion 13a in the Z direction. In the integrated portion 13, at least two input optical fibers 11 are bundled. The integrated portion 13 and the coupler 10 having the integrated portion 13 may also be referred to as TFB. The integrated portion 13 is an example of a bundle portion.

In the tapered portion 13a, each core 11a gradually becomes thinner toward the Z direction, and the distance between the cores 11a gradually decreases.

The end 13b extends in the Z direction while keeping the shape of the end in the Z direction of the tapered portion 13a. The end 13b extending in the Z direction while keeping the shape may be eliminated. In this case, the end in the Z direction of the tapered portion 13a is the integrated portion 13, that is, the end of the input optical fibers 11.

Such an integrated portion 13 is formed by drawing the bundled input optical fibers 11 in the axial direction of the optical axis Ax1 under heating. In this case, an oxyhydrogen burner is used for heating. With the use of an oxyhydrogen burner, the core 11a contains OH groups in the integrated portion 13. Since the OH groups restore defects in the Si-O network that constitutes quartz glass, Rayleigh scattering loss due to the defects in quartz glass can be reduced. From this viewpoint, it is preferable that the amount of OH groups in the core 11a is 10 [ppm] or more and 2000 [ppm] or less.

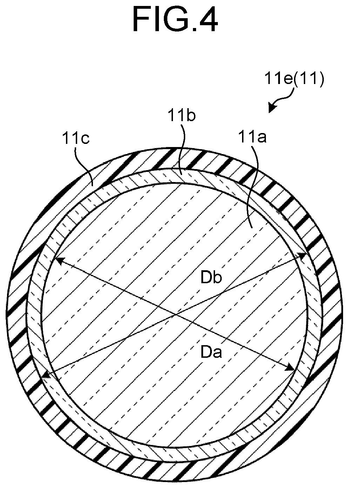

FIG. 4 is a cross-sectional view orthogonal to the center axis of an unstretched segment 11e (unstretched section, see FIG. 3) of the input optical fiber 11 that is outside the integrated portion 13 on the side opposite to the output optical fiber 12 and is not melted by heating and drawn, in a free state with no external force applied. In a cross section in a free state of the unstretched segment 11e, the outer periphery of the core 11a and the outer periphery of the cladding 11b are both substantially circular. On the side opposite to the output optical fiber 12 with respect to the integrated portion 13, the input optical fibers 11 are bundled while keeping a substantially circular shape in cross section.

As illustrated in FIG. 4, the cladding 11b is relatively thin in the input optical fiber 11 in the present embodiment. Specifically, in the unstretched segment 11e, the ratio Db/Da of the diameter Db of the cladding to the diameter Da of the core 11a is set, for example, to 1.04 or more and 1.25 or less.

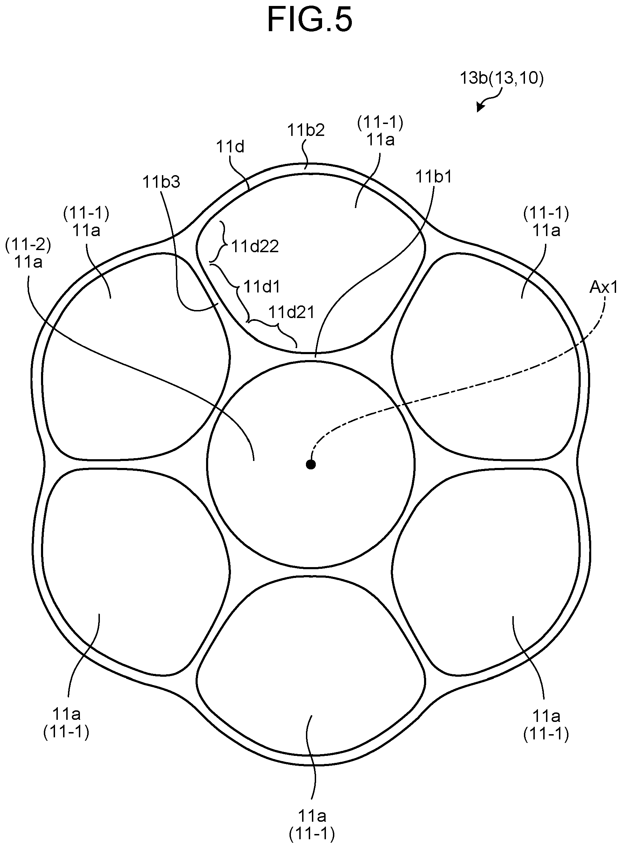

FIG. 5 is a cross-sectional view intersecting and orthogonal to the optical axis Ax1 of the end 13b of the integrated portion 13 at the V-V position in FIG. 3. For clarity, the hatching is omitted in FIG. 5. As illustrated in FIG. 5, the cross-sectional shape of the core 11a of the input optical fiber 11-2 located at the center of the cross section of the integrated portion 13 has a substantially circular shape. On the other hand, the cross-sectional shapes of the cores 11a of input optical fibers 11-1 located around the periphery of the input optical fiber 11-2 and aligned in the circumferential direction around the optical axis Ax1 each have a non-circular and substantially sector-like shape.

In a configuration in which the input optical fibers 11-1 are aligned around the periphery of the input optical fiber 11-2 as in the present embodiment, when the circularity of the cross-sectional shape of each of the cores 11a of the input optical fibers 11 is C (=4·π·S/L$^2$, S: area, L: perimeter, C=1 in a perfect circle), and the degree of deviation from perfect circle is Dc (=|1-C|, the absolute value of 1-C), the degree of deviation from perfect circle Dc of the core 11a of the input optical fiber 11-1 is larger than the degree of deviation from pure circle Dc of the core 11a of the input optical fiber 11-2.

The cross-sectional shape as illustrated in FIG. 5 is obtained when the input optical fibers 11 each originally having a circular cross section are pulled in the axial direction of the optical axis Ax1 in a flexible state under heating during formation of the integrated portion 13. In this case, each of the input optical fibers 11-1 shrinks in the radial direction of the optical axis Ax1 and extends in the circumferential direction around the optical axis Ax1, and is compressed together with the input optical fibers 11-1 adjacent in the circumferential direction. Due to such deformation, at the end 13b, the gap between the input optical fibers 11 adjacent to each other (the outer periphery of the cladding 11b) is filled with the deformed input optical fibers 11 and thereby narrowed and may even disappear. In this way, at the end 13b, the gap between the input optical fibers 11 adjacent to each other becomes smaller or disappears, so that only cleavage is required and polishing may be unnecessary in cutting the end 13b and forming the facet 13c. In this case, it is advantageous that manufacturing effort and costs are reduced.

The cladding 11b of each input optical fiber 11 forms a wall surrounding the core 11a. In two input optical fibers 11 adjacent to each other, the claddings 11b of the two input optical fibers 11 are at least partially welded and integrated. In the example in FIG. 5, the boundary (interface) between the claddings 11b disappears. However, this is an example, and the boundary between the claddings 11b may remain.

The cladding 11b has an inner wall 11b1, an outer wall 11b2, and a plurality of partition walls 11b3. At the end 13b, these inner wall 11b1, outer wall 11b2, and partition walls 11b3 extend in the axial direction of the optical axis Ax1.

The inner wall 11b1 is located radially inside the cores 11a of the input optical fibers 11-1 aligned in the circumferential direction around the optical axis Ax1 and has a tubular shape. The inner wall 11b1 surrounds the periphery of the core 11a of the input optical fiber 11-2 and is interposed between the core 11a of the input optical fiber 11-2 and the cores 11a of the input optical fibers 11-1. The inner wall 11b1 includes the cladding 11b of the input optical fiber 11-2 and portions of the claddings 11b of the input optical fibers 11-1.

The outer wall 11b2 is located radially outside the cores 11a of the input optical fibers 11-1 and surrounds the periphery of the cores 11a of the input optical fibers 11-1. The outer wall 11b2 has a tubular shape. The outer wall 11b2 includes portions of the claddings 11b of the input optical fibers 11-1.

The partition walls 11b3 are each interposed between the cores 11a of two input optical fibers 11-1 adjacent to each other in the circumferential direction around the optical axis Ax1 and have a substantially platelike shape. In a cross section in FIG. 5, the partition wall 11b3 extends linearly in the direction intersecting the optical axis Ax1, in the present embodiment, in the radial direction of the optical axis Ax1. The partition wall 11b3 may extend in a direction inclined relative to the radial direction in the cross section. The partition wall 11b3 includes portions of the claddings 11b of two adjacent input optical fibers 11-1. In the partition wall 11b3, the two claddings 11b may be partially welded or may not be welded, as described above. The partition wall 11b3 is an example of an extending portion. The partition wall 11b3 may also be referred to as a bridge.

In a cross section in FIG. 5, a boundary 11d between the core 11a and the cladding 11b of the input optical fiber 11-1 has a first section 11d1, and second sections 11d21 and 11d22 with a radius of curvature smaller than that of the first section 11d1, along the partition wall 11b3. The first section 11d1 and the second sections 11d21 and 11d22 are the boundary between the core 11a and the cladding 11b of the input optical fiber 11-1 in the circumferential direction around the optical axis Ax1. The second section 11d21 is located radially inside with respect to the first section 11d1, and the second section 11d22 is located radially outside with respect to the first section 11d1. The first section 11d1 is sandwiched between two second sections 11d21 and 11d22. As described above, the input optical fibers 11 each originally having a circular cross section are pressed and deformed radially inward of the optical axis Ax1 in a more flexible state under heating during formation of the integrated portion 13, whereby such a boundary 11d having the first section 11d1 and the second sections 11d21 and 11d22 is formed.

The inventors of the present invention have conducted elaborate studies and found that optical coupling of the input optical fibers 11 and one output optical fiber 12 having a cross-sectional shape as illustrated in FIG. 5 in the coupler 10 provides a flat-top (trapezoidal) intensity distribution of laser light in a cross section orthogonal to the optical axis Ax2 of the output optical fiber 12.

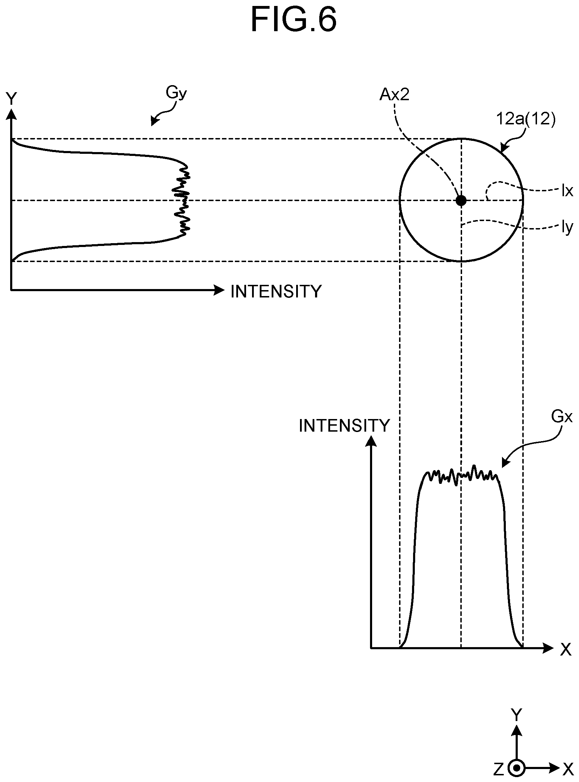

FIG. 6 illustrates a cross-section orthogonal to the optical axis Ax2 of the core 12a of the output optical fiber 12 and an example of intensity distributions of laser light in the cross section of the core 12a when laser light is input to one input optical fiber 11-1. In FIG. 6, a graph Gx is the intensity distribution of laser light on a center line lx passing through the optical axis Ax2 and along the X direction, and a graph Gy is the intensity distribution of laser light on a center line ly passing through the optical axis Ax2 and along the Y direction. As illustrated in the graphs Gx and Gy, the laser light has a flat-top intensity distribution on both of the center lines lx and ly. The intensity distribution of laser light has a substantially axisymmetric shape about the optical axis Ax2, and an intensity distribution almost equivalent to the graphs Gx and Gy can be obtained at a center line other than the center lines lx and ly.

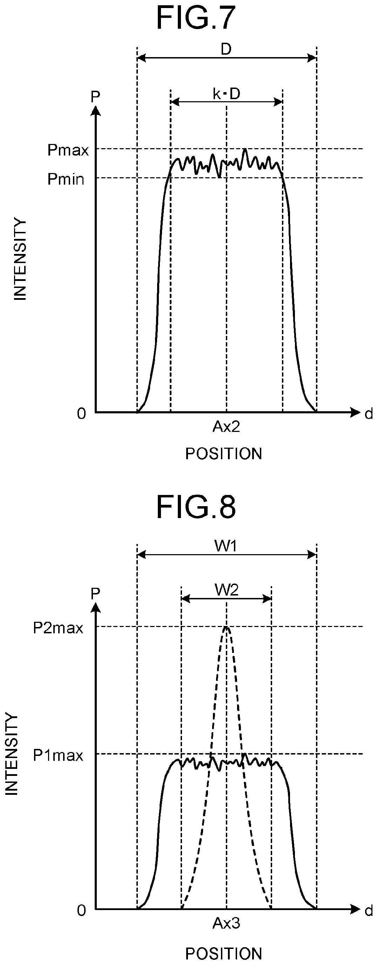

FIG. 7 is a graph illustrating an example of an intensity distribution of laser light on a center line of a cross section orthogonal to the optical axis Ax2 at a focus position when light emitted from the output optical fiber 12 is gathered through the optical system, in a case where laser light is input to one input optical fiber 11-1. The horizontal axis d indicates a position on the center line, and the vertical axis P indicates the intensity of laser light.

In this description, the flatness F (%) of the intensity distribution of laser light is defined by the following equation (1).

$$F = Pmax/Pmin \times 100 \hspace{6cm} (1)$$

Here, Pmax is the maximum value of intensity of laser light in a circular target range with a diameter k·D about the optical axis Ax2 in a cross section of the core 12a, Pmin is the minimum value of intensity of laser light in the target range, D is the beam diameter at the focus position, and k is a coefficient that defines the target range for calculation of the flatness F and is a number greater than 0 and smaller than 1. The flatness F is a value of 100 or more, and the closer to 100 the value of the flatness F is, the flatter the intensity distribution is.

As described above, the optical head 120 directs laser light output from the light source device 111 and laser light output from the light source device 112 toward the surface Wa of the object W. FIG. 8 is a graph illustrating an example of an intensity distribution of laser light L output from the optical head 120 on a center line passing through the optical axis Ax3 in a cross section orthogonal to the optical axis Ax3. The solid line is an intensity distribution of laser light with a wavelength of 400 [nm] or more and 500 [nm] or less from the light source device 111 (hereinafter referred to as the first laser light), and the broken line is an intensity distribution of laser light with a wavelength of 800 [nm] or more and 1200 [nm] or less from the light source device 112 (hereinafter referred to as the second laser light). As illustrated in FIG. 8, when the maximum value P1max of the first laser light is lower than the maximum value P2max of the second laser light, and the width W1 (beam width) of the first laser light is larger than the width W2 (beam width) of the second laser light, laser processing with higher quality and with less spatter, blow-holes, or cracks can be performed. This is presumably because the formation of a thermal conduction-type weld pool by the first laser light around a keyhole-type weld pool by the second laser light can further stabilize the weld pool. Presumably, when laser light L is swept over the surface Wa, the processing position is irradiated by the first laser light and preheated before the second laser light reaches the processing position, whereby rapid temperature rise at the processing position is suppressed and the weld pool is stabilized. The beam width may be defined as the diameter of a region of intensity that includes the peak of the beam and is $1/e^2$ or more of the peak intensity. In a case of a non-circular beam, the beam width may be defined as the length of a region in a direction perpendicular to the sweep direction in which the intensity is $1/e^2$ or more of the peak intensity.

The inventors of the present invention have conducted elaborate studies and found that, in laser processing in which the first laser light from the light source device 111 and the second laser light from the light source device 112 are combined and output toward the surface Wa of the object W in the optical head 120 as in the present embodiment, the flatness F of the first laser light is preferably 120 or less and more preferably 110 or less with the coefficient k = 0.7, in terms of the quality of laser processing.

The inventors have conducted elaborate studies and also found the following (1) to (6).

(1) When laser light is input to at least one of the input optical fibers 11-1, in other words, one or more input optical fibers 11-1, first laser light with a flatness F of 120 or less is obtained with the coefficient k = 0.7.

(2) The maximum value P1max increases as the number of input optical fibers 11-1 that input laser light having the same intensity increases among the input optical fibers 11-1. Also in this case, the flatness F is 120 or less with the coefficient k = 0.7.

(3) As a reference example, when laser light is not input to the input optical fibers 11-1 and laser light is input only to the input optical fiber 11-2, the flatness F is not 120 or less with the coefficient k = 0.7, and the intensity distribution is unimodal like a Gaussian distribution.

(4) Even when laser light is input to the input optical fiber 11-2, first laser light with a flatness F of 120 or less with the coefficient k = 0.7 can be obtained in some cases if laser light is input to at least one of the input optical fibers 11-1.

(5) In the case of (4), it is preferable that the intensity of laser light input to the input optical fiber 11-2 is lower than the total intensity of laser light input to the input optical fibers 11-1 or the intensity of laser light input to each of the input optical fibers 11-1. The flatness F can be changed by adjusting the ratio between the intensity of laser light input to the input optical fiber 11-1 and the intensity of laser light input to the input optical fiber 11-2.

(6) As a reference example, in a configuration in which the input optical fibers with a circular cross section are bundled, first laser light with a flatness F of 120 or less with the coefficient k = 0.7 is unable to be obtained.

The reason for the phenomena observed in (1) to (6) above is presumably that the light source device 111 is a multi-mode light source and the input optical fibers 11 and the output optical fiber 12 are multi-mode optical fibers, and in addition, (a) the core 11a of the input optical fiber 11-1 has a non-circular cross section as illustrated in FIG. 5, and (b) the cladding 11b between the cores 11a adjacent in the circumferential direction around the optical axis Ax1 is thin to cause leakage of laser light through the cladding 11b between the cores 11a adjacent in the circumferential direction.

For (b), it is preferable that the input optical fiber 11-1 has a relatively thin cladding 11b, as described above. From this viewpoint, the ratio Db/Da of the diameter Db of the cladding to the diameter Da of the core 11a (see FIG. 4) in the unstretched segment 11e of the input optical fiber 11-1 that is outside the integrated portion 13 on the side opposite to the output optical fiber 12 and is not melted by heating and drawn is preferably 1.04 or more and 1.25 or less, and more preferably 1.04 or more and 1.08 or less, in a free state with no external force applied or in substantially the same state as the free state. It is even more preferable that the cladding diameter/core diameter = 125/115 is set as an upper limit.

Based on the finding in (2) above, in the laser processing apparatus 100, the intensity of the first laser light can be changed while maintaining a state in which the flatness F is 120 or less with the coefficient k = 0.7 for the first laser light, by changing (switching) the number of light source devices 111 that output laser light among the light source devices 111, with an actuation control signal output by the controller 200. With this control, laser processing with higher quality can be performed under more appropriate conditions according to the material of the object W, the surface roughness of the surface Wa, the thickness of the object W, and the like.

The light source device 111 optically connected to the input optical fiber 11-2 located at the center in the integrated portion 13 may output laser light with a wavelength different from that of the light source device 111 optically connected to the input optical fiber 11-1 located on the periphery in the integrated portion 13. The light source device 111 optically connected to the input optical fiber 11-2 is an example of a second light source, and the end 13b of the input optical fiber 11-2 is an example of a third end. The light source device 111 optically connected to the input optical fiber 11-1 may output laser light (second laser light) with a wavelength of 400 [nm] or more and 500 [nm] or less, and the light source device 111 optically connected to the input optical fiber 11-2 may output laser light (second laser light) with a wavelength of 800 [nm] or more and 1200 [nm] or less.

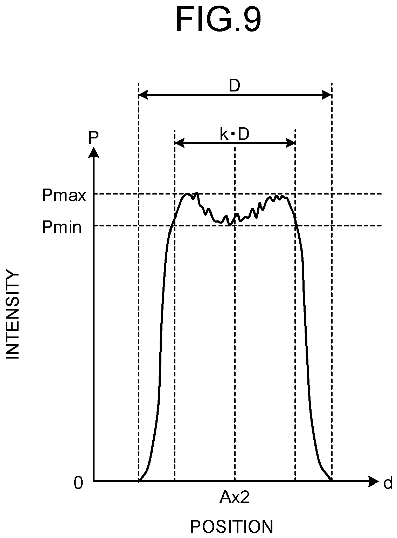

FIG. 9 is a graph illustrating another example of an intensity distribution of laser light on a center line of a cross section orthogonal to the optical axis Ax2 of the core 12a of the output optical fiber 12 when laser light is input to the input optical fibers 11-1. In the example in FIG. 9, the intensity distribution of laser light is a bimodal (M-shape) intensity distribution having intensity peaks at two places away from the optical axis Ax2. In this case, laser processing with higher quality can be performed if the intensity distribution has a flatness F of 120 or less with the coefficient = 0.7. The intensity distribution is not limited to a bimodal distribution in FIG. 9 and may be a multi-modal intensity distribution having more peaks, and laser processing with higher quality can be performed if the intensity distribution has a flatness F of 120 or less with the coefficient = 0.7.

As explained above, in the present embodiment, the cross-sectional shape of each of the cores 11a of the input optical fibers 11-1 has a non-circular shape at the end 13b (first end) of the input optical fibers 11-1 in the coupler 10 in which at least two input optical fibers 11-1 (first input optical fiber) and the output optical fiber 12 are optically coupled.

In the present embodiment, in a cross section intersecting the axial direction of the optical axis Ax1 of the end 13b, the cladding 11b of the input optical fiber 11-1 has the partition wall 11b3 (extending portion) between the cores 11a of two input optical fibers 11-1 adjacent in the circumferential direction around the optical axis Ax1. The partition wall 11b3 extends linearly in a direction intersecting the axial direction.

In the present embodiment, in a cross section intersecting the axial direction of the optical axis Ax1 of the end 13b, the boundary 11d between the core 11a and the cladding 11b of the input optical fiber 11-1 in the circumferential direction around the optical axis Ax1 has the first section 11d1 and the second sections 11d21 and 11d22 with a radius of curvature smaller than that of the first section 11d1.

In the present embodiment, the ratio of the outer diameter of the cladding to the outer diameter of the core in the unstretched segment 11e of the input optical fiber 11-1 that is outside the integrated portion 13 (bundle portion) in a free state with no external force applied is 1.04 or more and 1.25 or less.

In such a configuration, the intensity distribution of laser light on a center line passing through the optical axis Ax2 in a cross section orthogonal to the optical axis Ax2 of the output optical fiber 12 is not unimodal but flat-top or multi-modal. In the intensity distribution, the flatness F with the coefficient k=0.7 is 120 or less. According to the present embodiment, the laser processing apparatus 100 that can provide a suitable beam shape of laser light L can be implemented by a simpler or more compact configuration.

As in the present embodiment, the claddings 11b of the input optical fibers 11 adjacent to each other may be partially welded to each other, and the input optical fibers 11 may be integrated at the end 13b. In this case, for example, it is advantageous that the coupler 10 can be made in a more compact configuration as a member for bundling the input optical fibers 11 is unnecessary, and the manufacturing effort and costs can be reduced as the number of components can be reduced.

The coupler 10 in the present embodiment can be applied to a coupler 10 that couples laser light from the light source devices 111 that output first laser light, in the laser processing apparatus 100 that irradiates a surface Wa of an object W with laser light L in which first laser light with a wavelength of 400 [nm] or more and 500 [nm] or less and second laser light with a wavelength of 800 [nm] or more and 1200 [nm] or less are combined. In this case, the intensity distribution of the first laser light in a cross section intersecting the optical axis of the laser light L can be flat-top or multi-modal rather than being unimodal, and consequently, it is advantageous that laser processing with higher quality can be performed.

[Second and Third Embodiments]

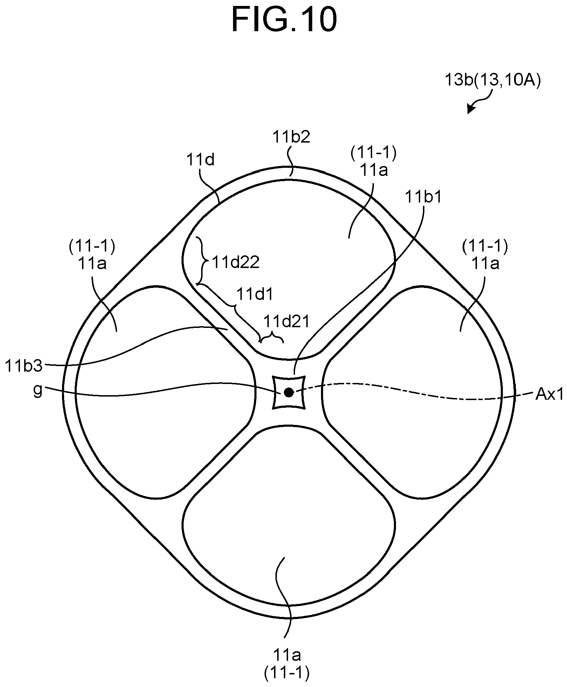

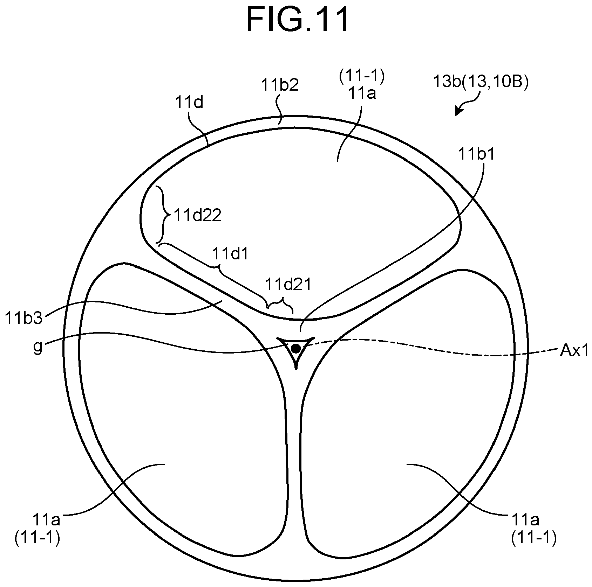

FIG. 10 is a cross-sectional view of the end 13b of the integrated portion 13 of a coupler 10A in a second embodiment at the same position as in FIG. 5. FIG. 11 is a cross-sectional view of the end 13b of the integrated portion 13 of a coupler 10B in a third embodiment at the same position as in FIG. 5. The coupler 10A in the second embodiment and the coupler 10B in the third embodiment have a configuration similar to that of the coupler 10 in the first embodiment except for the number and arrangement of input optical fibers 11, the cross-sectional shape of the end 13b, and the like. The hatching is also omitted in FIGS. 10 and 11.

The end 13b in the second embodiment has four input optical fibers 11-1 aligned in the circumferential direction around the optical axis Ax1, and the end 13b in the third embodiment has three input optical fibers 11-1 aligned in the circumferential direction around the optical axis Ax1. In the second and third embodiments, the end 13b does not have the input optical fiber 11-2.

Even in the second and third embodiments, the cross-sectional shapes of the cores 11a of the input optical fibers 11-1 each have a non-circular and substantially sector-like shape, in the same manner as in the foregoing first embodiment. However, the end 13b has a gap g between the input optical fibers 11-1 at the center of the cross section.

Even in the second and third embodiments, in a cross section intersecting the axial direction of the optical axis Ax1 of the end 13b, the cladding 11b of the input optical fiber 11-1 has the partition wall 11b3 (extending portion) between the cores 11a of two input optical fibers 11-1 adjacent in the circumferential direction around the optical axis Ax1, in the same manner as in the foregoing first embodiment. The partition wall 11b3 extends linearly in a direction intersecting the axial direction.

Even in the second and third embodiments, in a cross section intersecting the axial direction of the optical axis Ax1 of the end 13b, the boundary 11d between the core 11a and the cladding 11b of the input optical fiber 11-1 in the circumferential direction around the optical axis Ax1 has the first section 11d1 and the second sections 11d21 and 11d22 with a radius of curvature smaller than that of the first section 11d1, in the same manner as in the first embodiment.

Even in the second and third embodiments, the ratio of the outer diameter of the cladding to the outer diameter of the core in the unstretched segment 11e (not illustrated in FIGS. 10 and 11, see FIG. 3) of the input optical fiber 11-1 that is outside the integrated portion 13 (bundle portion) in a free state with no external force applied is 1.04 or more and 1.25 or less, in the same manner as in the foregoing first embodiment.

Even in these second and third embodiments, the intensity distribution of laser light on a center line passing through the optical axis Ax2 in a cross section orthogonal to the optical axis Ax2 of the output optical fiber 12 is not unimodal but flat-top or multi-modal. In the intensity distribution, the flatness F with the coefficient k=0.7 is 120 or less. The laser processing apparatus 100 to which one of the coupler 10A in the second embodiment and the coupler 10B in the third embodiment is applied instead of the coupler 10 in the first embodiment can have an effect similar to that of the foregoing first embodiment.

Although the embodiments and modifications of the present invention have been described above, the above embodiments and modifications are described only by way of example and not intended to limit the scope of the invention. The above embodiments and modifications can be carried out in various other forms, and various omissions, substitutions, combinations, and changes can be made without departing from the spirit of the invention. In addition, the configuration, shape, and other specifications (structure, type, direction, model, size, length, width, thickness, height, number, arrangement, position, material, and the like) can be changed as appropriate.

Industrial Applicability

The present invention can be used for laser processing apparatuses and couplers.

Reference Signs List

    100 laser processing apparatus

10, 10A, 10B coupler
11 input optical fiber
11-1 input optical fiber (first input optical fiber)
11-2 input optical fiber (second input optical fiber)
11a core
11b cladding
11b1 inner wall
11b2 outer wall
11b3 partition wall (extending portion)
11c coating
11d boundary
11d1 first section
11d21, 11d22 second section
11e unstretched segment
12 output optical fiber
12a core
12b cladding
12c end (second end)
12d facet
13 integrated portion (bundle portion)
13a tapered portion
13b end (first end)
13c facet
111 light source device (first light source)
112 light source device (second light source)
120 optical head
121, 121-1, 121-2 collimating lens
122 condenser lens
123 mirror
124 filter
130 delivery optical fiber
200 controller
Ax1 optical axis
Ax2 optical axis
Ax3 optical axis
d (radial) position
D outer diameter (of core of output optical fiber)
Da outer diameter (of core of first input optical fiber)
Db outer diameter (of cladding of first input optical fiber)
F flatness
Gx, Gy graph
g gap
k coefficient
L laser light
lx, ly center line
P intensity
Pmax maximum value
Pmin minimum value
P1max maximum value (of first laser light)
P2max maximum value (of second laser light)
W object
Wa surface
W1 width (of first laser light)
W2 width (of second laser light)
X direction
Y direction
Z direction

**Claims**

1.  A laser processing apparatus comprising:

    at least two first input optical fibers that are multi-mode optical fibers;
    an output optical fiber that is a multi-mode optical fiber;
    a coupler configured to optically couple a first end of a bundle portion in which the at least two first input optical fibers are bundled so as to be aligned in a circumferential direction, to a second end of the output optical fiber, the second end facing the first end;
    at least one first light source optically connected to one of the first input optical fibers to output laser light, the at least one first light source being a multi-mode light source; and
    an optical head optically connected to the output optical fiber to output laser light output by the first light source and passing through the first input optical fiber and the output optical fiber, wherein
    in a cross section intersecting an axial direction of the first end, a cladding of the first input optical fiber has an extending portion extending linearly in a direction intersecting the axial direction between cores of two first input optical fibers adjacent in a circumferential direction.

2.  The laser processing apparatus according to claim 1, wherein claddings of two first input optical fibers adjacent in a circumferential direction are welded to each other at the extending portion.

3.  A laser processing apparatus comprising:

    at least two first input optical fibers that are multi-mode optical fibers;
    an output optical fiber that is a multi-mode optical fiber;
    a coupler configured to optically couple a first end of a bundle portion in which the at least two first input optical fibers are bundled so as to be aligned in a circumferential direction, to a second end of the output optical fiber, the second end facing the first end;
    at least one first light source optically connected to one of the first input optical fibers to output laser light, the at least one first light source being a multi-mode light source; and
    an optical head optically connected to the output optical fiber to output laser light output by the first light source and passing through the first input optical fiber and the output optical fiber, wherein
    in a cross section intersecting an axial direction of the first end, a boundary between a core and a cladding of the first input optical fiber in a circumferential direction has a first section and a second section with a radius of curvature smaller than a radius of curvature of the first section.

4.  The laser processing apparatus according to claim 3, wherein the boundary has, as the second section, a second section located radially inside with respect to the first section and a second section located radially outside with respect to the first section.

5.  The laser processing apparatus according to any one of claims 1 to 4, further comprising a plurality of first light sources configured to output laser light with a same wavelength, as the first light source.

6.  The laser processing apparatus according to any one of claims 1 to 4, further comprising a plurality of first light sources configured to output laser light with different wavelengths, as the first light source.

7.  The laser processing apparatus according to claim 5 or 6, wherein the laser processing apparatus is configured to switch between output and output stop of laser light from each of the first light sources.

8.  The laser processing apparatus according to any one of claims 1 to 7, wherein the bundle portion has no optical fiber radially inside of at least two the first input optical fibers aligned in a circumferential direction.

9.  The laser processing apparatus according to any one of claims 1 to 7, wherein the bundle portion has a second input optical fiber radially inside of at least two the first input optical fibers aligned in a circumferential direction.

10. The laser processing apparatus according to claim 9, wherein

    the second input optical fiber has a third end aligned with the first end, facing the second end, and optically coupled to the second end at the bundle portion, and

the laser processing apparatus further comprises a second light source optically connected to the second input optical fiber to output laser light.

11. The laser processing apparatus according to claim 10, wherein

the second input optical fiber is a multi-mode optical fiber, and
the second light source is a multi-mode light source.

12. The laser processing apparatus according to claim 10 or 11, wherein the second light source is configured to output laser light with a wavelength different from a wavelength of the first light source.

13. The laser processing apparatus according to any one of claims 10 to 12, wherein power of laser light of the second light source is lower than power of laser light of the first light source.

14. The laser processing apparatus according to any one of claims 1 to 13, wherein at the first end, a core of the first input optical fiber contains OH groups.

15. The laser processing apparatus according to claim 14, wherein at the first end, an amount of OH groups in the core of the first input optical fiber is 10 ppm or more and 2000 ppm or less.

16. The laser processing apparatus according to any one of claims 1 to 15, wherein a ratio of an outer diameter of a cladding to an outer diameter of a core in an unstretched segment of the first input optical fiber that is outside the bundle portion in a free state with no external force applied is 1.04 or more and 1.25 or less.

17. The laser processing apparatus according to any one of claims 1 to 16, further comprising a third light source configured to output laser light and optically connected to the optical head, wherein
the optical head includes an optical system configured to combine laser light from the first light source and laser light from the third light source.

18. The laser processing apparatus according to claim 17, wherein

a wavelength of laser light output by the first light source is 400 nm or more and 500 nm or less, and
a wavelength of laser light output by the third light source is 800 nm or more and 1200 nm or less.

19. A coupler comprising:

at least two first input optical fibers that are multi-mode optical fibers; and
an output optical fiber that is a multi-mode optical fiber,
the coupler being configured to optically couple a first end of a bundle portion in which the at least two first input optical fibers are bundled so as to be aligned in a circumferential direction, to a second end of the output optical fiber, the second end facing the first end, wherein
in a cross section intersecting an axial direction of the first end, a cladding of the first input optical fiber has an extending portion extending linearly in a direction intersecting the axial direction between cores of two first input optical fibers adjacent in a circumferential direction.

# FIG.1

# FIG.2

## FIG.3

# FIG.4

# FIG.5

# FIG.6

# FIG.7

# FIG.8

# FIG.9

# FIG.10

# FIG.11

## INTERNATIONAL SEARCH REPORT

International application No.

**PCT/JP2022/005340**

### A. CLASSIFICATION OF SUBJECT MATTER

*B23K 26/064*(2014.01)i; *G02B 6/26*(2006.01)i; *G02B 6/42*(2006.01)i
FI: B23K26/064 K; G02B6/26 301; G02B6/42

According to International Patent Classification (IPC) or to both national classification and IPC

### B. FIELDS SEARCHED

Minimum documentation searched (classification system followed by classification symbols)

B23K26/064; G02B6/26; G02B6/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-183977 A (THE FURUKAWA ELECTRIC CO., LTD.) 12 November 2020 (2020-11-12) paragraphs [0024], [0041]-[0052], [0101]-[0102], fig. 4-5, 9 | 1-5, 8-11, 14-16, 19 |
| A | | 6-7, 12-13, 17-18 |
| Y | JP 2018-190918 A (FUJIKURA LTD.) 29 November 2018 (2018-11-29) paragraphs [0030]-[0035] | 1-5, 8-11, 14-16, 19 |
| A | | 6-7, 12-13, 17-18 |
| Y | JP 2003-112281 A (MATSUSHITA ELECTRIC IND. CO., LTD.) 15 April 2003 (2003-04-15) paragraph [0017] | 14-16 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/005340**

| Patent document cited in search report | | | Publication date (day/month/year) | Patent family member(s) | Publication date (day/month/year) |
|---|---|---|---|---|---|
| JP | 2020-183977 | A | 12 November 2020 | (Family: none) | |
| JP | 2018-190918 | A | 29 November 2018 | US 2020/0067261 A1 paragraphs [0059]-[0071] | |
| JP | 2003-112281 | A | 15 April 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5864644 A